# EUROPEAN PATENT SPECIFICATION

(11) **EP 1 547 722 B1**
(45) Date of publication and mention of the grant of the patent: **23.06.2010**
(21) Application number: 04258040.7
(22) Date of filing: 22.12.2004
(51) Int. Cl.: B23K 35/368, B23K 35/30

(54) **Metal-base flux-cored wire for gas-shielded arc welding and gas-shielded arc welding method**
Verfahren und Metall-Basis-Fulldraht zum Lichtbogenschweissen in Schutzgas
Procédé et fil fourré à base de métal pour le soudage à l'arc sous gaz protecteur

(30) Priority: 26.12.2003 JP 2003432895
(43) Date of publication of application: 29.06.2005
(73) Proprietor: Kabushiki Kaisha Kobe Seiko Sho (Kobe Steel, Ltd.), Kobe-shi, Hyogo 651-8585 (JP)
(72) Inventor: Hashimoto, Tetsuya c/o Fujisawa Plant in Kobe, Fujisawa-shi Kanagawa 251-0014 (JP); Hidaka, Takeshi c/o Fujisawa Plant in Kobe Steel, Fujisawa-shi Kanagawa 251-0014 (JP)
(74) Representative: Gillard, Richard Edward

(56) References cited:
- EP-A- 0 652 071
- US-A- 3 177 340
- US-A- 3 742 185

## Description

### TECHNICAL FIELD

The present invention relates to a metal-base flux-cored wire for straight-polarity gas-shielded arc welding and a gas-shielded arc welding method using the same. More particularly, the present invention relates to a metal-base flux-cored wire for gas-shielded arc welding to be used for automatic or semiautomatic straight-polarity arc welding using an Ar-CO₂ mixed gas as a shielding gas, and a gas-shielded arc welding method.

### BACKGROUND ART

Metal-base flux-cored wires, such as disclosed in Patent documents JP-A 63-183795, JP-A 06-218578 and JP-A 06-234075 have been used for gas-shielded arc welding from the viewpoint of achieving highly efficient, low spattering and low slug welding. Generally, the gas-shielded arc welding using such a welding wire uses a reverse-polarity circuit in which the welding wire is connected to the positive terminal and the base metal is connected to the negative terminal. In vertical down welding, in which the welding wire is moved downward along_a vertical weld line, the melted metal is caused to droop down by gravity in the process of welding and a concave bead is formed. Such a concave bead has a small throat thickness and the strength of such a concave bead is lower than that of welds formed by other welding positions. Therefore, in performing gas-shielded arc welding in a vertical down welding mode, two passes of gas-shielded arc welding are performed or a straight-polarity circuit that tends to form a convex reinforcement is used to increase the throat thickness of the bead and to increase the strength of the weld zone.

A flux-cored wire for straight-polarity gas-shielded arc welding is proposed in, for example, Patent document JP-A 02-55696. This previously proposed flux-cored wire specifies the BaF₂, Al, Mg, Fe, Mn and Si contents of the flux and flux-filling factor to suppress spattering.

Techniques mentioned in those patent documents have the following problems. Beads having a sufficient throat thickness cannot be formed in a vertical down welding mode by straight-polarity gas-shielded arc welding using the metal-base flux-cored wires disclosed in Patent documents JP-A 63-183795, JP-A 06-218578 and JP-A 06-234075. Since the conventional metal-base flux-cored wire is designed for reverse-polarity welding, stable electric arc cannot be formed, spattering increases, beads of a satisfactory shape cannot be formed and working efficiency reduced when the metal-base flux-cored wire is used for straight-polarity welding. It is troublesome and requires much work to perform welding work in welding positions other than the welding position for vertical down welding in a reverse-polarity welding mode and welding work in the welding position for vertical down welding in a straight-polarity welding mode.

The flux of the flux-cored wire mentioned in Patent document JP-A 02-55696 is a basic flux containing BaF₂ as a principal component and hence produces much slug. Consequently, low-slug welding (continuous welding), which is the feature of welding using metal-base flux-cored wires, cannot be achieved. Gas-shielded arc welding performed in the straight-polarity welding mode using this flux-cored wire produced spatters at an excessively high rate in the range of 1.4 to 1.8 g/min.

The present invention has been made in view of those problems and it is therefore an object of the present invention to provide a metal-base flux-cored wire for gas-shielded are welding and a gas-shielded arc welding method capable of suppressing the production of spatters and of forming beads having a sufficiently big throat thickness when it is used for straight-polarity vertical down welding using Ar-CO₂ mixed gas, and capable of enabling satisfactory welding work in welding positions other than the welding position for straight-polarity vertical down welding.

### Means for Solving the Problem

A metal-base flux-cored wire for gas-shielded arc welding in a first aspect of the present invention to be used for automatic or semiautomatic straight-polarity arc welding using an Ar-CO₂ mixed gas as a shielding gas includes: a steel hoop; and a flux contained in the steel hoop; wherein the steel hoop has a C content of 0.02% by mass or below, and the flux contains C in a C content between 0.07 and 0.22% by mass, Mn in a Mn content between 1.10 and 2.50% by mass, Si in a Si content between 0.40 and 1.50% by mass, F in a F content between 0.005 and 0.05% by mass, Fe in a Fe content between 11 and 23% by weight and alkali metals in an alkali metal content between 0.020 and 0.090% by mass on the basis of the total mass of the metal-base flux-cored wire, the alkali metals include Li, Na and K, and the alkali metal content ratio: (Li content)/(Na content + K content) is between 1.0 and 12.0.

The present invention specifies the C content, the alkali metal content and the alkali metal content ratio to achieve electric arc concentration (electric arc stabilization) during welding in a straight-polarity welding mode and to adjust the viscosity of the melted metal properly. Consequently, spatters generating rate can be reduced and beads having a sufficiently big throat thickness can be formed by straight-polarity vertical down welding. Since stable short circuit transfer at a low current is possible, satisfactory welding work can be achieved by welding in welding positions other than that for straight-polarity vertical down welding, such as welding in welding positions for vertical up/overhead welding.

Preferably, the flux contains a compound of an alkali metal and a ferrite (hereinafter, referred to as "alkali metal ferrite) . It is particularly preferable that the alkali metal ferrite is lithium ferrite. This flux is capable of enhancing electric arc concentration (electric arc stabilization) without increasing slug. The flux may contain graphite. This flux is capable of diminishing globules.

A gas-shielded arc welding method in a second aspect of the present invention is characterized in performing welding in a straight-polarity welding mode using the metal-base flux-cored wire for gas-shielded arc welding in the first aspect of the present invention and a mixed shielding gas containing Ar in an Ar concentration between 70 and 90% by volume and CO₂ in a CO₂ concentration between 10 and 30% by volume.

According to the present invention, the flux containing the components including C in proper contents and the hoop including restricted C content are capable of reducing the amount of spatters and forming beads having an increased throat thickness by straight-polarity vertical down welding and of improving the efficiency of welding work in welding positions other than that for straight-polarity vertical down welding.

### BRIEF DESCRIPTION OF THE DRAWINGS

Figs. 1(a) to 1(d) are sectional views of flux-cored wires.
Fig. 2 is a sectional view of assistance in explaining a throat thickness evaluating method.
Fig. 3(a) is a view of assistance in explaining a disk type spatter-collecting method of collecting spatters, and Fig. 3(b) is a sectional view taken on the line A-A in Fig. 3(a).
Fig. 4 is a sectional view of assistance in explaining a bead's shape evaluating method.

### BEST MODE FOR CARRYING OUT THE INVENTION

A metal-base flux-cored wire in a preferred embodiment according to the present invention for gas-shielded arc welding will be described. The metal-base flux-cored wire of the present invention is used for automatic or semiautomatic straight-polarity arc welding using an Ar-CO₂ mixed gas as a shielding gas.

Conditions for determining the composition of the flux of the metal-base flux-cored wire for gas-shielded arc welding will be explained.

### C content: 0.07 to 0.22% by weight on the basis of the total mass of the metal-base flux-cored wire

C improves electric arc force (electric arc concentration) and increases the viscosity of the meltedmetal. Electric arc concentration is unsatisfactory and an unstable electric arc is formed when the C content is below 0.07% by mass. Consequently, the melted metal is liable to droop and beads having a sufficiently big throat thickness cannot be formed by vertical down fillet welding, and a stable electric arc cannot be formed for small-current welding, such as vertical up/overhead welding. Fume generating rate and the amount of spatters increase when the C content is above 0.22% by mass. Therefore, a proper C content is in the range of 0.07 to 0.22% by mass. Preferably C contained in the metal-base flux-cored wire of the present invention is graphite. Graphite is effective in diminishing the size of spatters produced during straight-polarity welding and stabilizing the electric arc. The flux containing graphite improves the reformation of an electric arc after short circuit during vertical up/overhead small-current welding, and the efficiency of welding work in all kinds of welding positions.

### Mn content: 1.10 to 2.50% by mass on the basis of the total mass of the metal-base flux cored wire

Mn is a deoxidizing element and is added to the flux to adjust strength and the viscosity of the melted metal. The viscosity of the melted metal decreases, beads of a small throat thickness are formed by vertical down fillet welding and beads are liable to droop during vertical up/overhead welding when the Mn content is below 1.10% by mass. Deposited metals have excessively high strength and low cold cracking resistance when the Mn content is above 2.50% by mass. Therefore, a proper Mn content is in the range of 1.10 to 2.50% by mass on the basis of the total mass of the metal-base flux-cored wire. Mn may be contained in the flux in metal Mn, Fe-Mn or Fe-Si-Mn. The present invention expresses the content of such an Mn-containing material by an equivalent Mn content.

### Si content: 0.40 to 1.50% by mass on the basis of the total mass of the metal-base flux-cored wire

Si has a bead shaping effect in addition to a deoxidizing effect. Si is ineffective and beads are formed in bad shapes when the Si content is below 0.40% by mass. The deposited metal has low toughness, excessively high strength and low cold cracking resistance when the Si content is above 1.50% by mass. Therefore, a proper Si content is in the range of 0.40 to 1.50% by mass. Si may be contained in the flux in Fe-Si, Fe-Si-Mn or Fe-Si-Mg. The present invention expresses the content of such Si-containing material by an equivalent Si content.

### F content: 0.005 to 0.05% by mass on the basis of the total mass of the metal-base flux-cored wire

F is added to the flux to adjust electric arc force (electric arc concentration) and to reduce the diffusible hydrogen content of a deposited metal. The diffusible hydrogen content of the deposited metal is excessively large, and the cold cracking resistance and the resistance to gas cavity formation are unsatisfactory when the F content is below 0. 005% by mass. Fume generating rate and the amount of spatters increase when the F content is above 0.05% by mass. Therefore, a proper F content is in the range of 0.005 to 0.05% by mass. F may be contained in LiF, K₂SiF₆ or NaF. The present invention expresses the content of such F-containing material by an equivalent F content

### Fe content: 11 to 23% by mass on the basis of the total mass of the metal-base flux-cored wire

Fe is added to the flux to adjust flux ratio and to improve welding efficiency. The amount of spatters is excessively large when the Fe content is below 11% by mass. Troubles including unsatisfactory feed are liable to occur during welding, and it is possible that the drawability of the wire deteriorates and the wire is broken during the manufacture of the metal-base flux-cored wire when the Fe content is above 23% by mass. Therefore, a proper Fe content is in the range of 11 to 23% by mass on the basis of the total mass of the metal-base flux-cored wire. Fe may be contained in Fe powder, Fe-Mn, Fe-Si or Fe-Al. The present invention expresses the content of such Fe-containing material by an equivalent Fe content. Fe content here includes Fe of metal Fe and excludes Fe of iron oxides and compounds of iron oxide.

### Alkali metal content: 0.020 to 0.090% by mass on the basis of the total mass of the metal-base flux-cored wire

Alkali metals are effective in improving electric arc stability and reducing the amount of spatters. The electric arc is unstable and the amount of spatters increases when the alkali metal content is below 0.020% by mass. The moisture resistance of the metal-base flux-cored wire is unsatisfactory and the deposited metal has problems related to cold cracking and gas cavity formation when the alkali metal content is above 0.090% by mass. Therefore, a proper alkali metal content is in the range of 0.020 to 0. 090% by mass on the basis of the total mass of the metal-base flux-cored wire. Alkali metals may be contained in a Na ferrite, a Li ferrite, Na feldspar or K feldspar. Increase in the amount of slug negates low-slug welding (continuous welding), which is one of the features of the metal-base flux-cored wire of the present invention. Therefore, it is preferable to use an alkali metal ferrite capable of improving electric arc concentration (electric arc stability) without increasing the amount of slug. It is most preferable that the metal-base flux contains a Li ferrite as a source of Li because Li is the most effective one of alkali metals in improving electric arc concentration (electric arc stability). The present invention expresses the content of such an alkali metal compound by an equivalent Li, Na or K content.

### (Li content)/ (Na content + K content): 1.0 to 12.0

The alkali metal content ratio: (Li content) / (Na content + K content), where Li content, Na content and K content in percent by mass are obtained by converting a Li compound content, a Na compound content and K compound content, respectively. The range of the alkali metal content ratio specified by the present invention is 1.0 to 12.0. Electric arc concentration (electric arc stability) can enhanced and low-spatter welding can be achieved by welding operations in all kinds of welding positions (low-current and medium-current welding). The electric arc is unstable, and spatters cannot be satisfactorily reduced and beads having a sufficient throat thickness cannot be formed by vertical down fillet welding when the alkali metal content ratio is below 1.0. The frequency of short circuit decreases and vertical up/overhead welding is difficult when the alkali metal content ratio is above 12.0.

Conditions for determining the composition of the metal hoop of the metal-base flux-cored wire for gas-shielded arc welding will be explained.

### C content: 0.02% by mass or below

The flux of the metal-base flux-cored wire of the present invention contains carbon, such as graphite. Graphite diminishes the size of spatters to facilitate welding work. Fume generating rate and the amount of large spatters increase with the increase of the C content of the metal-base flux-cored wire. The steel hoop of the metal-base flux-cored wire of the present invention has a low C content of 0.02% by mass or below to suppress the generation of large spatters and fumes.

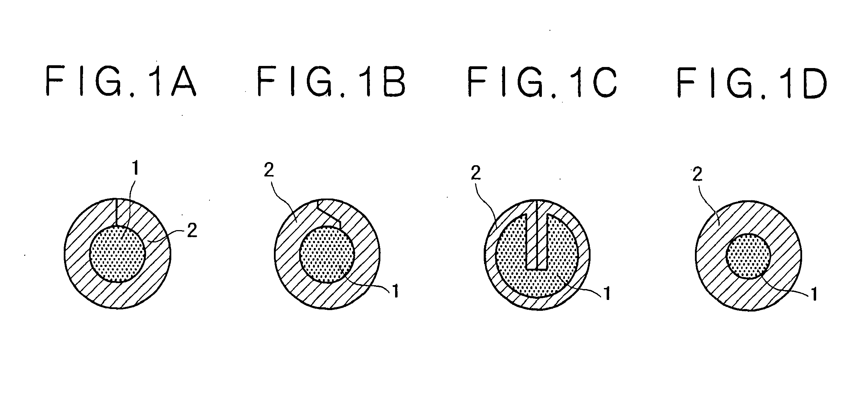

Figs. 1 (a) to 1 (d) are sectional views of flux-cored wires. There is no particular restriction on the shape of the metal-base flux-cored wire of the present invention and the metal-base flux-cored wire of the present invention may have, for example, a sectional shape resembling any one of the sectional shapes shown in Figs. 1(a) to 1(d).

A gas-shielded arc welding method using the metal-base flux-cored wire for gas-shielded arc welding will be described. The gas-shielded arc welding method of the present invention uses the foregoing metal-base flux-cored wire and an Ar-CO₂ mixed gas as a shielding gas, and is carried out by an automatic or a semiautomatic arc welding machine. The gas-shielded arc welding method uses a straight-polarity circuit, in which the metal-base flux-cored welding wire is connected to the negative terminal and the base metal is connected to the positive terminal, for all welding positions.

The Shielding gas is a mixed gas containing 70 to 90% by volume Ar and 10 to 30% by volume CO₂. The amount of alloy elements remaining in the deposited metal increases, the deposited metal has an excessively high strength and the cold cracking resistance tends to decrease when the CO₂ concentration of the shielding gas is below 10% by volume. Fume generating rate and the amount of spatters increase and welding work becomes difficult when the CO₂ concentration of the shielding gas is above 30% by volume. Welding work becomes unstable and satisfactory welding cannot be achieved when only CO₂ gas is used as the shielding gas.

Preferably, a welding current for vertical down welding and horizontal flat fillet welding is in the range of 210 to 290 A and a welding current for vertical up/overhead welding is in the range of 110 to 140A. Preferably, an arc voltage for vertical down welding and horizontal flat fillet welding is in the range of 23 to 29 V and an arc voltage for vertical up/overhead welding is in the range of 14 to 18 V. Such welding currents and arc voltages stabilize the electric arc and facilitate welding work for welding in all welding positions.

### Example

Effects of examples of the present invention and comparative examples will be comparatively described. Flux-cored wires in examples and flux-cored wires in comparative examples were produced by filling fluxes of compositions shown in Tables 2.1 and 2.2 in hoops No. X and hoops No. Y respectively having compositions shown in Table 1. The hoops No. X are high-C hoops and the hoops No. Y are low-C hoops. In tables 2.1 and 2.2, other elements include inevitable impurities, such as SiO₂, TiO₂ and FeO. In the samples in Tables 2.1 and 2.2, Li₂FeO₄ was included in the flux as Li source and graphite carbon was included in the flux as C source.

**Table 1**

| Hoop No. | Composition (% by mass) | | | | | | | | |
|---|---|---|---|---|---|---|---|---|---|
| | C | Si | Mn | S | P | Al | Ti | N | Other elements |
| X | 0.025 | 0.01 | 0.25 | 0.004 | 0.008 | 0.048 | 0.005 | 0.0022 | Fe and inevitable impurities |
| Y | 0.015 | 0.02 | 0.25 | 0.004 | 0.010 | 0.040 | 0.005 | 0.0020 | |

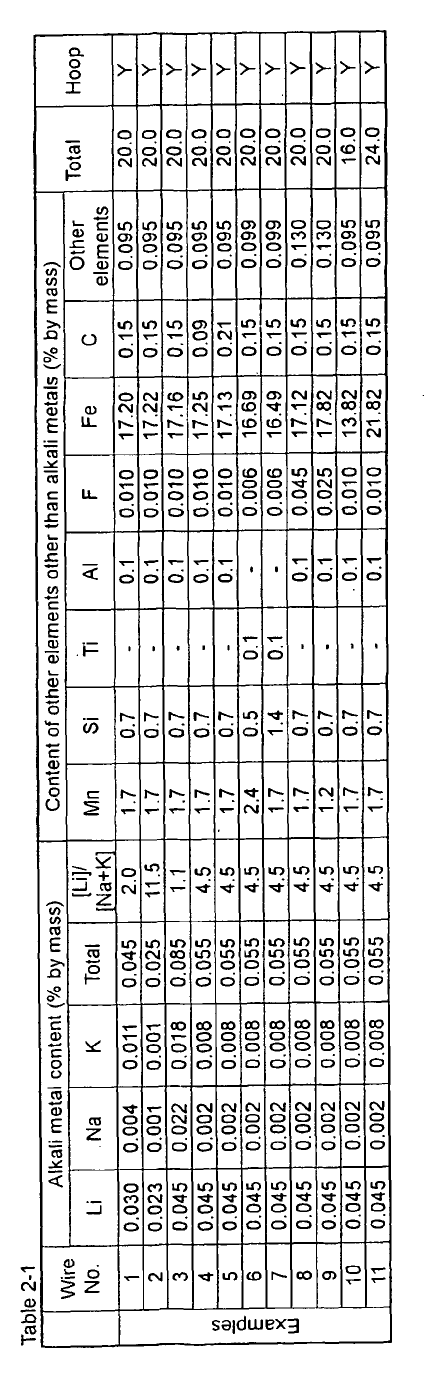

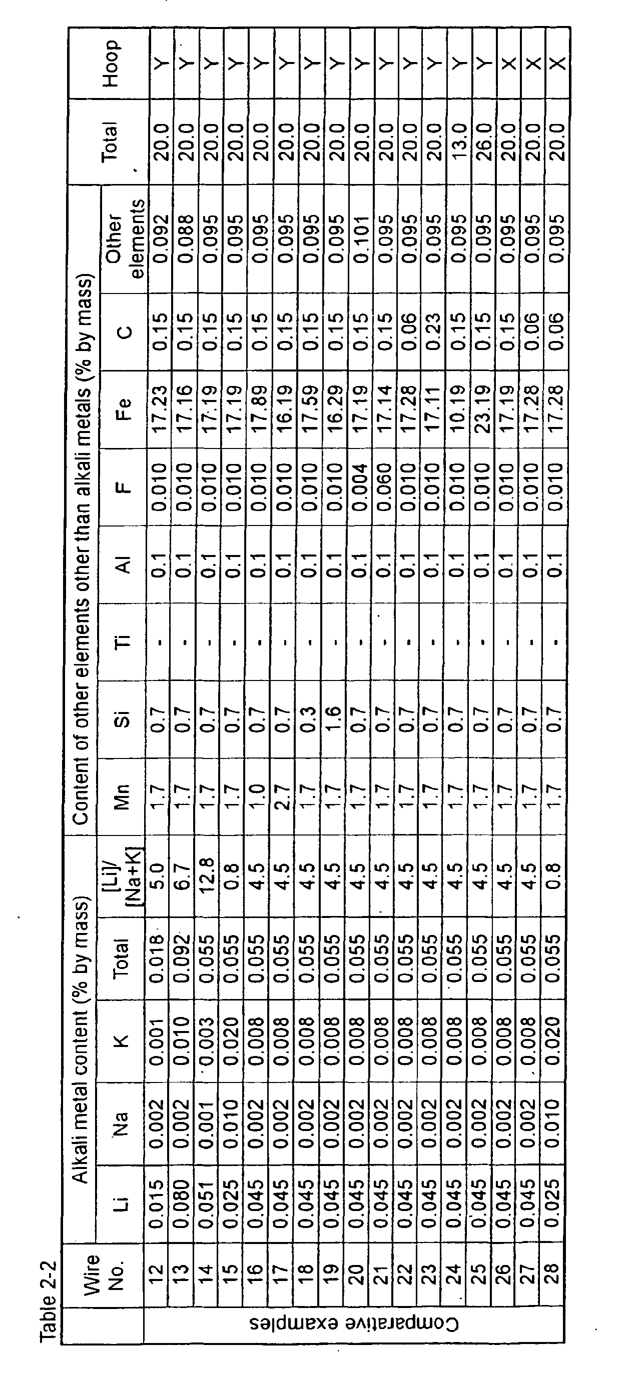

Vertical down fillet 1-pass gas-shielded arc welding and flat/horizontal fillet 1-pass gas-shielded arc welding were performed by an automatic welding machine using the flux-cored wires in Examples 1 to 11 and Comparative examples 12 to 28, and a vertical up/overhead fillet 1-pass gas-shielded arc welding was performed by a semiautomatic welding machine using the flux-cored wires in Examples 1 to 11 and Comparative examples 12 to 28. Welding conditions are shown in Table 3.

**Table 3**

| Welding position | | Vertical down | Vertical up/overhead | Flat/horizontal |
|---|---|---|---|---|
| Welding method | | Automatic 1-pass welding | Semiautomatic 1-pass welding | Automatic 1-pass welding |
| Base metal | Type | JIS G3106 SM400 | JIS G3106 SM400 | JIS G3106 SM400 |
| | Thickness (mm) | 9 | 9 | 9 |
| Type of joint | | T-joint fillet welding | T-joint fillet welding | T-joint fillet welding |
| Shielding gas | Type | 80% Ar + 20% CO₂ | 80% Ar + 20% CO₂ | 80% Ar + 20% CO₂ |
| | Flow rate (liters/min) | 20 | 20 | 20 |
| Welding current (A) | | 250 | 130 | 250 |
| Arc voltage (V) | | 26 | 15 | 26 |
| Welding speed (cm/min) | | 60 | 7 to 8 | 40 |
| Number of cycles | | 2 | 2 | 2 |

Welded joints formed by vertical down fillet welding using the flux-cored wires were evaluated in terms of throat thickness and amount of spatters, welded joints formed by welding in welding positions (vertical up/overhang welding and flat/horizontal welding) other than vertical down welding using the flux-cored wires were evaluated in terms of welding conditions (arc stability and shapes of spatters and beads).

### Methods of evaluation will be described

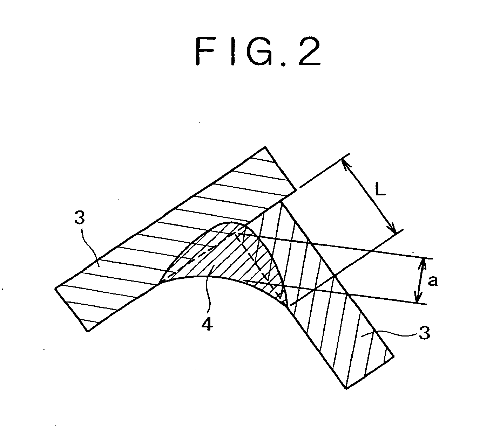

The welded joint was cut at an optional position thereon by machining, the section of the cut welded joint was ground and the ground section was examined by visual observation to measure the throat thickness of the welded joint. Fig. 2 is a sectional view of assistance in explaining a throat thickness evaluating method. The same welding operation was performed twice. Throat thicknesses a and leg lengths L of two samples were measured, and mean throat thickness a and mean leg length L were calculated. Welded joint having the mean throat thickness a not smaller than 0.6 times the mean leg length L and less than 0.7 times the mean leg length L are marked with a circle, welded joints having the mean throat thickness a not smaller than 0.5 times the mean leg length L and less than 0.6 times the mean leg length L are indicated by a triangle, and welded joints having the mean throat thickness a less than 0.5 times the mean leg length L are marked with a cross.

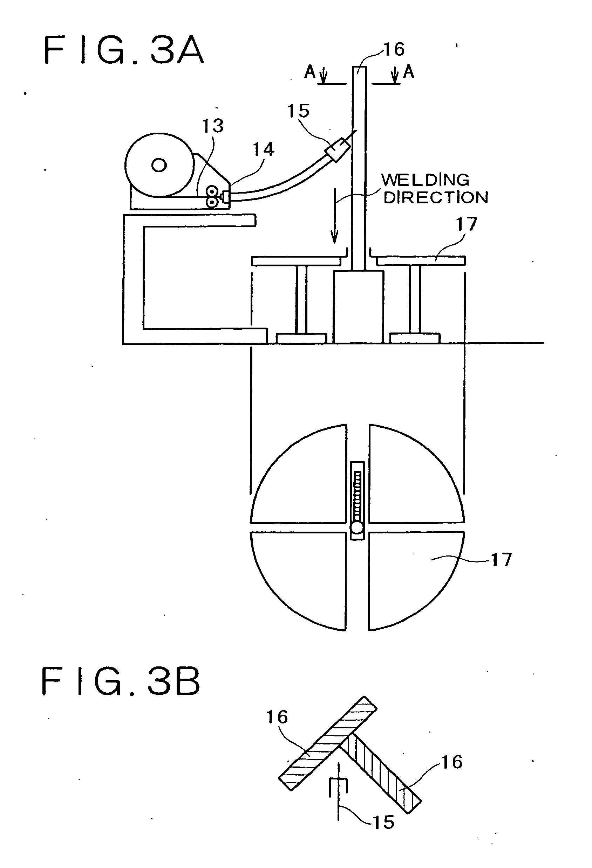

Fig. 3(a) is a view of assistance in explaining a disk type spatter-collecting method of collecting spatters, and Fig. 3(b) is a sectional view taken on the line A-A in Fig. 3(a). The disk type spatter-collect method collects spatters produced during two cycles of a welding operation by a collecting disk 17 and measures the amounts of collected spatters produced during the two cycles of the welding operation and calculates the mean amount of spatters. Welding operations that generated large spatters of particle sizes not smaller than 297 µm, which cause a trouble, at a spatter generating rate below 1.0 g/min are marked with a circle, welding operations that generated large spatters at a spatter generating rate not lower than 1.0 g/min and lower than 1.5 g/min are marked with a triangle, and welding operations that generated large spatters at a spatter generating rate not lower than 1.5 g/min are marked with a cross'. In Figs. 3(a) and 3(b), Nos. 13, 14, 15 and 16 denote wire, wire feeder, welding torch and base metals, respectively.

Turbulence of the arc during vertical up/overhead fillet welding was observed visually to evaluate the stability of the arc. Arcs that were stabilized are marked with a circle, arcs that were occasionally turbulent are marked with a triangle and arcs that were frequently turbulent are marked with a cross.

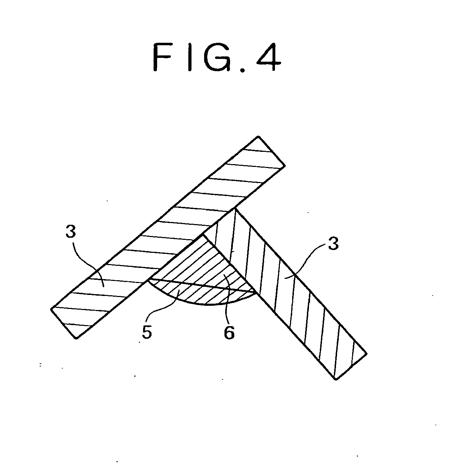

Fig. 4 is a sectional view of assistance in explaining a bead's shape evaluating method. The shapes of beads formed by vertical up/overhead fillet welding and flat/horizontal fillet welding of two base metals 3, 3 were evaluated in terms of ratio S₀/S = S₀/ (S₀ + S₁), where S is the total sectional area of the bead, S₀ is the sectional area of a bulging part 5 of the bead and S₁ is the sectional area of a base part 6 of the bead. Beads having ratios S₀/S below 10% are marked with a circle, beads having ratios S₀/S between 10 and 20% are marked with a triangle and beads having ratios S₀/S above 20% are marked with a cross.

Fume generating rate was evaluated according to a method specified in Z3930 JIS. Welding was performed in a flat position, the power source was connected to the metal-base flux-cored wire and the base metal in a straight polarity, the shielding gas contained 80% by volume Ar and 20% by volume CO₂, the welding current was 250 A, the arc voltage was 26 V, and the welding speed was 30 cm/min. Fume generating rates exceeding 900 mg/min are marked with a triangle and those exceeding 1200 mg/min are marked with a cross.

The moisture resistance of the metal-base flux-cored wires was evaluated. The metal-base flux-cored wires were heated at 110°C for 1 hr for preparatory drying, the metal-base flux-cored wires dried by preparatory heating were kept in a thermohygrostat for one week, and then the respective moisture contents of the metal-base flux-cored wires were measured by the Karl Fischer technique (750°C, Ar) . The metal-base flux-cored wires having a moisture content exceeding 500 ppm were marked with a triangle, and those having a moisture content exceeding 800 ppm were marked with a cross.

The diffusible hydrogen content of the deposited metal was measured by a gas chromatography method specified in Z3118, JIS. Welding was performed in a flat position, the power source was connected to the metal-base flux-cored wire and the base metal in a straight polarity, the shielding gas contained 80% by volume Ar and 20% by volume CO₂, the welding current was 250 A, the arc voltage was 26 V, and the welding speed was 30 cm/min. Deposited metals having a diffusible hydrogen content exceeding 5 ml/100 g are marked with a triangle and those having a diffusible hydrogen content exceeding 10 ml/100 g are marked with a cross.

Mechanical properties of deposited metals were measured by a method specified in Z3313, JIS. Base metals were 20 mm thick plates of a steel designated by SM400 specified in G3106, JIS. Welding was performed by a five-layer ten-pass buildup method in a flat position, the power source was connected to the metal-base flux-cored wire and the base metal in a straight polarity, the shielding gas contained 80% by volume Ar and 20% by volume CO₂, the welding current was 250 A, the arc voltage was 26 V, and the welding speed was 30 cm/min. Deposited metals other than those having a strength between 490 and 620 N/mm² and a toughness not lower than 47J (40°C) are marked with a cross.

The feeding facility of the flux-cored wires was evaluated by test welding. The power source was connected to the flux-cored wire and the base metal in a straight polarity. Test welding used a 6 m long torch and a mixed shielding gas containing 80% by volume Ar and 20% by volume CO₂. The test welding was performed in a flat position bead-on welding mode using a welding current of 250 A and an arc voltage of 26 V at a welding speed of 30 cm/min. Arcs that were stable are marked with a circle, arcs that were occasionally unstable are marked with a triangle and arcs that were frequently unstable are marked with a cross.

Results of evaluations are shown in Table 4.

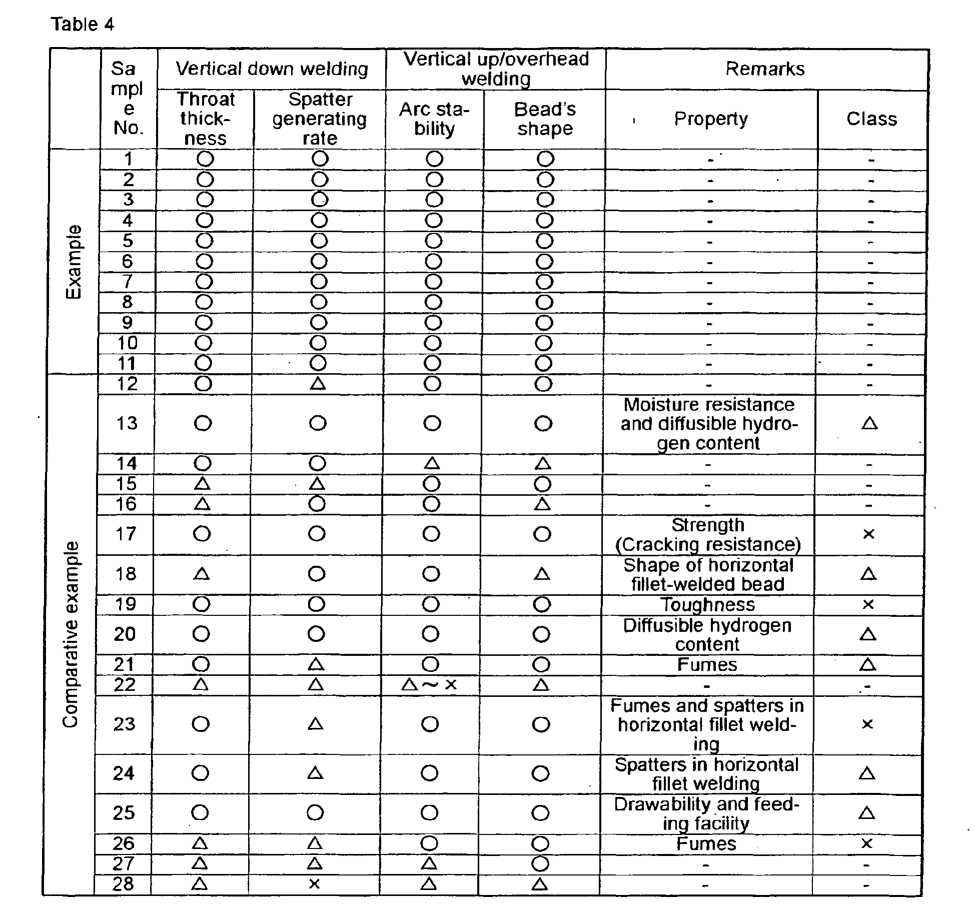

As obvious from Table 4, the flux-cored wire No. 12 having an alkali metal content below the lower limit of the alkali metal content range specified by the present invention generated spatters at a high spatter generating rate in vertical down fillet welding. The flux-cored wire No. 13 having an alkali metal content above the upper limit of the alkali metal content range specified by the present invention was unsatisfactory in moisture resistance, and the deposited metal deposited by using the same flux-cored wire had a large diffusible hydrogen content and was unsatisfactory in cold cracking resistance and the resistance to gas cavity formation. When the flux-cored wire No. 14 in a comparative example having an alkali metal content ratio expressed by (Li content) / (Na content + K content) higher than the alkali metal content ratio specified by the present invention was used for vertical up/overhead fillet welding, the arc was unstable and an excessively convex bead was formed. When the flux-cored wire No. 15 in a comparative example having an alkali metal content ratio expressed by (Li content)/(Na content + K content) lower than the alkali metal content ratio specified by the present invention was used for vertical down fillet welding, a bead having an insufficient throat thickness was formed and spatters were generated at a high spatter generating rate. Vertical down fillet welding formed a bead having an insufficient throat thickness when the flux-cored wire No. 16 in a comparative example having a Mn content below the lower limit of the Mn content range specified by the present invention. Vertical up/overhang fillet welding formed an excessively convex bead when the flux-cored wire No. 16 was used. A deposited metal deposited by welding using the flux-cored wire No. 17 in a comparative example having a Mn content above the Mn content range specified by the present invention had an excessively high strength and was unsatisfactory in cold cracking resistance.

Vertical down fillet welding using the flux-cored wire No. 18 in a comparative example having a Si content below the lower limit of the Si content range specified by the present invention formed a bead having an insufficient throat thickness, and vertical up/overhand fillet welding and horizontal fillet welding using the flux-cored wire No. 18 formed excessively convex beads. A deposited metal deposited by welding using the flux-cored wire No. 19 in a comparative example having a Si content above the upper limit of the Si content range specified by the present invention was unsatisfactory in toughness. A deposited metal deposited by welding using the flux-cored wire No. 20 in a comparative example having a F content below the lower limit of the F content range specified by the present invention had an excessively large diffusible hydrogen content and was unsatisfactory in cold cracking resistance and resistance to gas cavity formation. Vertical down fillet welding using the flux-cored wire No. 21 in a comparative example having a F content above the upper limit of the F content range specified by the present invention generated spatters at a high spatter generating rate and generated fumes at a high fume generating rate. In vertical down fillet welding using the flux-cored wire No. 22 in a comparative example including the flux having a C content below the C content range for the flux specified by the present invention, the electric arc had a low arc force and was unstable, the melted metal was liable to droop and the bead had an insufficient throat thickness and spatters were generated at a high spatter generating rate. In vertical up/overhang fillet welding using the flux-cored wire No. 22, the arc was unstable and the shape of the bead was bad. Vertical down fillet welding and horizontal fillet welding using the flux=cored wire No. 23 in comparative example including the flux having a C content for the flux above the upper limit of the C content range specified by the present invention generated spatters at a high spatter generating rate and fumes at a high fume generating rate. Vertical down fillet welding and horizontal fillet welding using the flux-cored wire No. 24 in a comparative example having a Fe content below the lower limit of the Fe content range specified by the present invention generated spatters at a high spatter generating rate. The flux-cored wire No. 25 in a comparative example having a Fe content above the upper limit of the Fe content range specified by the present invention had a low drawability, was liable to cause trouble in feeding the flux-cored wire during welding and formed an unstable electric arc.

Vertical down fillet welding using the flux-cored wire No. 26 in a comparative example including the high-C hoop No. X having a C content outside the C content range specified by the present invention formed a bead having an insufficient throat thickness, generated spatters at a high spatter generating rate and generated fumes at a high fume generating rate. Vertical down fillet welding using the flux-cored wire No. 27 in a comparative example including the hoop having a C content outside the C content range specified by the present invention and the flux having a C content below the lower limit of the C content range specified by the present invention formed a bead having an insufficient throat thickness and generated spatters at a high spatter generating rate. In vertical up/overhand, fillet welding using the flux-cored wire No. 27, the electric arc was unstable. The flux-cored wire No. 28 in a comparative example including the steel hoop having a C content outside the C content range specified by the present invention and the flux having a C content below the lower limit of the C content range for the flux specified by'the present invention could not satisfy the evaluation criteria at all in vertical down fillet welding and vertical up/overhang fillet welding.

The flux-cored wires Nos. 1 to 11 in examples of the present invention were satisfactory in throat thickness and spatter generating rate in vertical down fillet welding, and were satisfactory in factors facilitating welding work in welding positions other than those for vertical down welding.

## Claims

1. A metal-base flux-cored wire for gas-shielded arc welding comprising:
a steel hoop; and
a flux contained in the steel hoop,
wherein the steel hoop has a C content of 0.02% by mass or below,
and the flux contains C in a C content of 0.07 to 0.22% by mass, Mn in a Mn content of 1.10 to 2.50% by mass, Si in a Si content of 0.40 to 1.50% by mass F in a F content of 0.005 to 0.05% by mass, Fe in a Fe content of 11 to 23% by weight and alkali metals in an alkali metal content of 0.020 to 0.090% by mass on the basis of the total mass of the metal-base flux-cored wire,
and wherein the alkali metals include Li, Na and K, and alkali metal content ratio expressed by (Li content) / (Na content + K content) is from 1.0 to 12.0.

2. The metal-base flux-cored wire for gas-shielded arc welding according to claim 1, wherein the flux contains a compound of an alkali metal and a ferrite.

3. The metal-base flux-cored wire for gas-shielded arc welding according to claim 2, wherein the compound of alkali metal and a ferrite is a lithium ferrite.

4. The metal-base flux-cored wire for gas-shielded arc welding according to any one of claims 1 to 3, wherein the flux contains graphite.

5. A gas-shielded arc welding method of an automatic or semiautomatic straight-polarity arc welding system using the metal-base flux-cored wire for gas-shielded arc welding according to any one of claims 1 to 4, wherein an Ar-CO₂ mixed gas is used as a shielding gas.

6. The gas-shielded arc welding method according to Claim 5, wherein the mixed shielding gas contains Ar in an Ar concentration of 70 to 90% by volume and CO₂ in a CO₂ concentration of 10 to 30% by volume.

## Patentansprüche

1. Draht auf Metallbasis mit Flussmittelkern zum Schutzgas-Lichtbogenschweißen, umfassend:
eine Stahlhülle und
ein in der Stahlhülle enthaltenes Flussmittel,
wobei die Stahlhülle einen C-Gehalt von 0,02 Massen-% oder weniger aufweiset und
das Flussmittel C mit einem C-Gehalt von 0,07 bis 0,22 Masse-%, Mn mit einem Mn-Gehalt von 1,10 bis 2,50 Massen-%, Si mit einem Si-Gehalt von 0,40 bis 1,50 Masse-%, F mit einem F-Gehalt von 0,005 bis 0,05 Massen-%, Fe mit einem Fe-Gehalt von 11 bis 23 Ges.-% und Alkalimetalle mit einem Alkalimetall-Gehalt von 0,020 bis 0,090 Massen-% auf der Basis der Gesamtmasse des Drahts auf Metallbasis mit Flussmittelkern enthält,
und wobei die Alkalimetalle Li, Na und K beinhalten und das Alkallmetallgehaltverhältnis, ausgedrückt durch (Li-Gehalt)/(Na-Gehalt + K-Gehalt), von 1,0 bis 12,0 beträgt.

2. Draht auf Metallbasis mit Flussmittelkern zum Schutzgas-Lichtbogenschweißen nach Anspruch 1, wobei das Flussmittel eine Verbindung aus einem Alkalimetall und einem Ferrit enthält.

3. Draht auf Metallbasis mit Flussmittelkern zum Schutzgas-Lichtbogenschweißen nach Anspruch 2, wobei die Verbindung aus einem Alkalimetall und einem Ferrit ein Lithiumferrit ist.

4. Draht auf Metallbasis mit Flussmittelkern zum Schutzgas-Lichtbogenschweißen nach einem der Ansprüche 1 bis 3, wobei das Flussmittel Graphit enthält.

5. Schutzgas-Lichtbogenschweißverfahren eines automatischen oder halbautomatischen Lichtbogenschweißsystems mit negativer Polung, bei dem der Draht auf Metallbasis mit Flussmittelkern zum Schutzgas-Lichtbogenschweißen nach einem der Ansprüche 1 bis 4 eingesetzt wird, wobei ein Ar-CO₂-Mischgas als Schutzgas verwendet wird.

6. Schutzgas-Lichtbogenschweißverfahren nach Anspruch 5, wobei das Mischschutzgas Ar mit einer Ar-Konzentration von 70 bis 90 Volumen-% und CO₂ mit einer CO₂-Konzentration von 10 bis 30 Volumen-% enthält.

## Revendications

1. Fil fourré à base de métal pour soudage à l'arc sous atmosphère gazeuse comprenant :
un anneau en acier ; et
un fondant contenu dans l'anneau en acier,
dans lequel l'anneau en acier a une teneur en C d'au maximum 0,02 % en masse, et le fondant contient C dans une teneur en C de 0,07 à 0,22 % en masse, Mn dans une teneur en Mn de 1,10 à 2,50 % on masse, Si dans une teneur en Si de 0,40 à 1,50 % en masse, F dans une teneur en F de 0,005 à 0,05 % en masse, Fe dans une teneur en Fe de 11 à 23 % en poids et des métaux alcalins dans une teneur en métaux alcalins de 0,020 à 0,090 % en masse sur la base de la masse totale du fil fourré à base de métal,
et dans lequel les métaux alcalins comprennent Li, Na et K, et le rapport de la teneur en métaux alcalins exprimée par (teneur en Li) / (teneur en Na + teneur en K) est de 1,0 à 12,0.

2. Fil fourré à base de métal pour soudage à l'arc sous atmosphère gazeuse selon la revendication 1, dans lequel le fondant contient un composé d'un métal alcalin et d'une ferrite.

3. Fil fourré à base de métal pour soudage à l'arc sous atmosphère gazeuse selon la revendication 2, dans lequel le composé d'un métal alcalin et d'une ferrite est une ferrite de lithium.

4. Fil fourré à base de métal pour soudage à l'arc sous atmosphère gazeuse selon l'une quelconque des revendications 1 à 3, dans lequel le fondant contient du graphite.

5. Procédé de soudage l'arc sous atmosphère gazeuse d'un système de soudage à l'arc à polarité directe automatique ou semi-automatique utilisant le fil fourré à base de métal pour soudage à l'arc sous atmosphère gazeuse selon l'une quelconque des revendications 1 à 4, dans lequel un gaz mélangé d'Ar-CO₂ est utilisé en guise de gaz protecteur.

6. Procédé de soudage l'arc sous atmosphère gazeuse selon la revendication 5, dans lequel le gaz protecteur mélangé contient Ar dans une concentration en Ar de 70 à 90 % en volume et CO₂ dans une concentration en CO₂ de 10 à 30 % en volume.
